# EUROPEAN PATENT SPECIFICATION

(11) **EP 2 943 719 B1**
(45) Date of publication and mention of the grant of the patent: **21.04.2021**
(21) Application number: 14716041.0
(22) Date of filing: 14.01.2014
(51) Int. Cl.: F21W 131/406, G03B 33/00, F21Y 115/10, F21Y 113/13, G03B 21/20

(54) **IMPROVED HOMOGENIZATION SYSTEM FOR AN LED LUMINAIRE**
VERBESSERTES HOMOGENISIERUNGSSYSTEM FÜR EINE LED-LEUCHTE
SYSTÈME D'HOMOGÉNÉISATION AMÉLIORÉE POUR DISPOSITIF D'ÉCLAIRAGE À DIODES ÉLECTROLUMINESCENTES

(30) Priority: 14.01.2013 US 201361752006 P
(43) Date of publication of application: 18.11.2015
(73) Proprietor: Robe Lighting s.r.o., 756 61 Roznov pod Radhostem (CZ)
(72) Inventor: JURIK, Pavel, Prostredni Becva, 75656 (CZ); VALCHAR, Josef, Prostredni Becva, 75656 (CZ)
(74) Representative: Hanna Moore + Curley
(86) International application number: PCT/US2014/011521
(87) International publication number: WO 2014/110588

(56) References cited:
- EP-A1- 2 461 087
- WO-A1-2006/129220
- WO-A1-2012/176117
- WO-A2-2011/112914
- CN-A- 102 518 964

## Description

### TECHNICAL FIELD OF THE INVENTION

The present invention generally relates to a method for controlling the light output from an array of LEDs when used in a light beam producing luminaire, specifically to a method relating to combining multiple colors of LED into a single homogenized light beam.

### BACKGROUND OF THE INVENTION

High power LEDs are commonly used in luminaires for example in the architectural lighting industry in stores, offices and businesses as well as in the entertainment industry in theatres, television studios, concerts, theme parks, night clubs and other venues. These LEDs are also being utilized in automated lighting luminaires with automated and remotely controllable functionality. For color control it is common to use an array of LEDs of different colors. For example a common configuration is to use a mix of Red, Green and Blue LEDs. This configuration allows the user to create the color they desire by mixing appropriate levels of the three colors. For example illuminating the Red and Green LEDs while leaving the Blue extinguished will result in an output that appears Yellow. Similarly Red and Blue will result in Magenta, and Blue and Green will result in Cyan. By judicious control of these three controls the user may achieve nearly any color they desire. More than three colors may also be used and it is well known to add Amber, Cyan, or Royal Blue LEDs to the Red, Green and Blue to enhance the color mixing and improve the gamut of colors available.

The differently colored LEDs may be arranged in an array in the luminaire where there is physical separation between each LED, and this separation, coupled with differences in die size and placement for each color, may affect the spread of the individual colors and results in objectionable spill light and color fringing of the combined mixed color output beam. It is common to use a lens or other optical device in front of each LED to control the beam shape and angle of the output beam; however these optical devices commonly have differing effect for different colors and color fringing or other aberrations may be visible in the output beam. It is also known to use dichroic reflecting filters to combine three single colors of LED into a beam.

For example, European Patent Application Publication No. EP 2 461 087 A1 discloses a LED illumination device for stage lighting. The illumination device includes LED arrays packaged on a heat dissipating substrate and including a plurality of LED chips, a light combining device for combining the light emitted by respective LED arrays, and a focusing lens for focusing the combined light to a light output port. The illumination device further includes a fly-eye lens pair disposed between the light combining device and the focusing lens. The fly-eye lens pair comprises two fly-eye lenses, each being formed of a plurality of lens units tightly connected together and having the same lens surface curvature. A method for improving color uniformity of the device is also provided.

However, these systems do not provide means for mixing more than three colors of LEDs. It would be advantageous to have a system which provides good homogenization of more than three colors of LEDs into a single output light beam.

There is a need for a homogenization system for an LED array based luminaire which provides improvements in homogenization for LED systems comprising four or more different colors of LEDs.

### SUMMARY

The invention is defined in claim 1. Particular embodiments are set out in the dependent claims.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
- **FIGURE 1**: illustrates an embodiment of an improved LED light homogenizer;
- **FIGURE 2**: illustrates an embodiment of a first LED array of the LED light homogenizer illustrated in **Figure 1****;**
- **FIGURE 3**: illustrates an embodiment of a second LED array of the LED light homogenizer illustrated in **Figure 1****;**
- **FIGURE 4**: illustrates an embodiment of a third LED array of the LED light homogenizer illustrated in **Figure 1****;**
- **FIGURE 5**: illustrates the prior art use of transmissive /reflective dichroic filters;
- **FIGURE 6**: illustrates the improved use of transmissive/reflective dichroic filters in the embodiment of the LED light homogenizer illustrated in **Figure 1** and/or **Figure 8****;**
- **FIGURE 7**: illustrates an alternative embodiment of the improved light homogenizer;
- **FIGURE 8**: illustrates an alternative embodiment of the invention; and
- **FIGURE 9**: illustrates a further embodiment of a LED light homogenizer.

### DETAILED DESCRIPTION OF THE INVENTION

Embodiments of an improved LED light homogenizer are illustrated in the FIGURES, like numerals being used to refer to like and corresponding parts of the various drawings.

The present invention generally relates to a method for controlling the light output from an array of LEDs when used in a light beam producing luminaire, specifically to a method relating to providing improvements in homogenization for LED systems comprising different colors of LEDs.

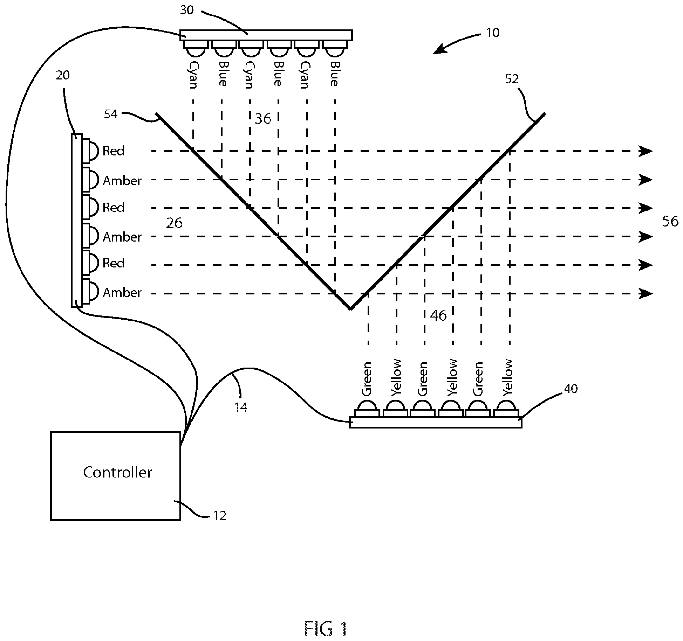

Figure 1 illustrates a schematic of an embodiment of an improved LED light homogenizer 10. A first LED array 20 may comprise an arrangement of LED' s with discrete longer wavelength peaks such as red and amber LEDs. A second LED array 30 may comprise an arrangement of LED' s with discrete short wavelength peaks such as blue and cyan LEDs. A third LED array 40 may comprise an arrangement of LED' s with discrete midrange wavelength peaks such as yellow and green LEDs. Each array, 20, 30 and 40, may have the associated LEDs arranged in a layout such that the colors are well distributed and mixed across the array. In the embodiment shown the LED arrays 20, 30, and 40 are controlled by a controller 12, electrically connected 14 to the LED arrays 20, 30, and 40.

In some embodiments there are a limited number of discrete peak LED's in an array. For example in the embodiment illustrated there are two discrete peak types for the three arrays employed: the long wavelength array 20 has red and amber, the short wavelength array 30 has blue and cyan and the third midrange array 40 has green and yellow. In some embodiments all of the LEDs from an array are controlled by the controller **12** as a unit. In other embodiments the lights of distinct colors are controlled independent of the other distinct colors. So for example in the long bandwidth array, the red LEDs are controlled as a separate color than the amber LEDs.

The red and amber light **26** from first LED array **20** impinges on the rear of dichroic filter **54.** Dichroic filter **54** is designed such that it will allow light in red and amber wavelengths to pass through unaffected, In the embodiment illustrated filter **54** may be designed as a long pass filter generally letting through wavelengths longer than a certain cut off. In alternative embodiments this filter may be designed to be a band pass filter that lets discrete long wavelength light through where the band passes match the peak wavelengths of the discrete LEDs in the long wavelength array **20.** Lights of other wavelengths are not allowed to pass and are reflected out of the light beam.

The red and amber light transmitted through filter **54** from first LED array **20** next impinges on the rear of dichroic filter **52.** Dichroic filter **52** is also designed such that it will allow light in red and amber wavelengths to pass through unaffected. The characteristics of alternative embodiments of filter **52** are further discussed below. But with respect to the red and amber light, filter **52** acts either a long pass or a band pass for the longer red and amber wavelengths. Thus the red and amber light **26** from first LED array **20** will exit in light beam **56.**

The blue and cyan light **36** from second LED array **30** impinges on the front of dichroic filter **54.** As previously described, dichroic filter **54** is designed as a long pass filter (or discrete long band bands pass) and therefore it will reflect light in shorter blue and cyan wavelengths.

The blue and cyan light from second LED array **30** next impinges on the rear of dichroic filter **52.** As previously described dichroic filter **52** allows passage of long wavelengths. Dichroic filter **52** is also designed to allow passage of short wavelengths such that it will allow light in blue and cyan wavelengths to pass through unaffected. Thus the blue and cyan light **36** from second LED array **30** will also exit in light beam **56,** superimposed on any red and amber light from first LED array **20.**

The green and yellow light **46** from third LED array **40** impinges on the front of dichroic filter **52.** Dichroic filter **52** is designed such that it will reflect light in the midrange of the color spectrum thus reflecting rather than transmitting green and yellow wavelengths. Thus the green and yellow light **46** from third LED array **40** will also exit in light beam **56,** superimposed on any red and amber light from first LED array **20** and any blue and cyan light from second LED array **30.**

Thus, by selective transmission and reflection by dichroic filters **52** and **54,** all colors of LED: red, amber, blue, cyan, green and yellow, are homogenized and superimposed into a single exit beam **56.**

The example shown here utilizes six colors of LED; red, amber, blue, cyan, green, and yellow, however the invention is not so limited and other mixes of LED colors are possible. For example, a royal blue LED could be utilized instead of, or as well as, the cyan LED on LED array **30.** For each choice of LEDs on the arrays a corresponding design change must be considered for the dichroic filters so that they reflect and/or transmit the appropriate light wavelengths.

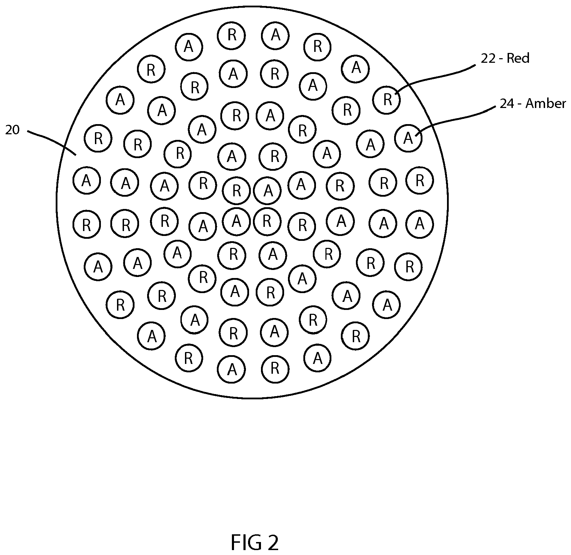

**Figure 2** illustrates an embodiment of the first LED array 20 of the invention. In this embodiment a plurality of red LEDs **22** and a plurality of amber LEDs **24** are distributed across array **20.** The arrangement and numbers of each of the red and amber LEDs may be chosen such as to optimize the mix and balance of the two colors. For example, if the amber LEDs are twice as powerful as the red LEDs, it may only be necessary to have half the number of amber as red. In that instance, the array would comprise two-thirds red LEDs **22** and one-third amber LEDs **24.** The array **20** illustrated is circular, however the invention is not so limited and array **20** may be any shape chosen from but not limited to circular, square, rectangular, hexagonal, or octagonal.

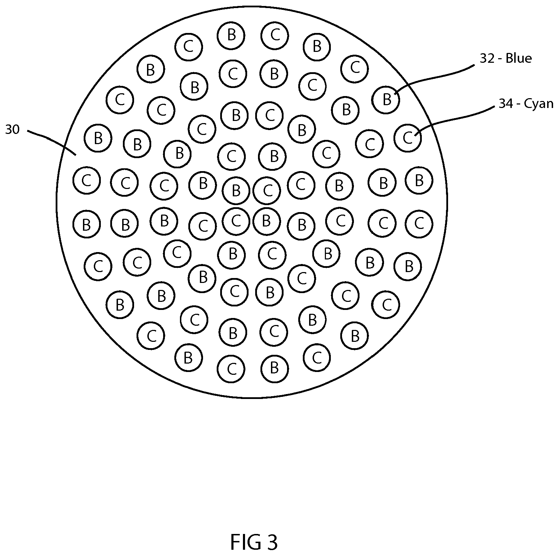

**Figure 3** illustrates an embodiment of the second LED array 30 of the invention. In this embodiment a plurality of blue LEDs **32** and a plurality of cyan LEDs **34** are distributed across array **30.** The arrangement and numbers of each of the blue and cyan LEDs may be chosen such as to optimize the mix and balance of the two colors. The array **30** illustrated is circular, however the invention is not so limited and array **30** may be any shape chosen from but not limited to circular, square, rectangular, hexagonal, or octagonal.

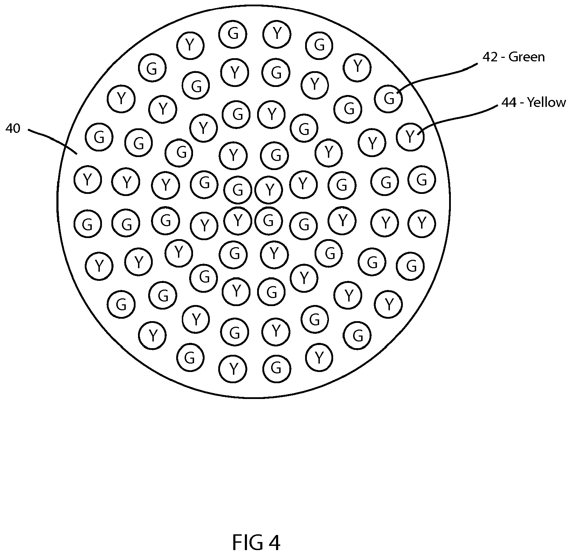

**Figure 4** illustrates an embodiment of the third LED array 40 of the invention. In this embodiment a plurality of green LEDs **42** and a plurality of yellow LEDs **44** are distributed across array **40.** The arrangement and numbers of each of the green and yellow LEDs may be chosen such as to optimize the mix and balance of the two colors. The array **40** illustrated is circular, however the invention is not so limited and array **40** may be any shape chosen from but not limited to circular, square, rectangular, hexagonal, or octagonal.

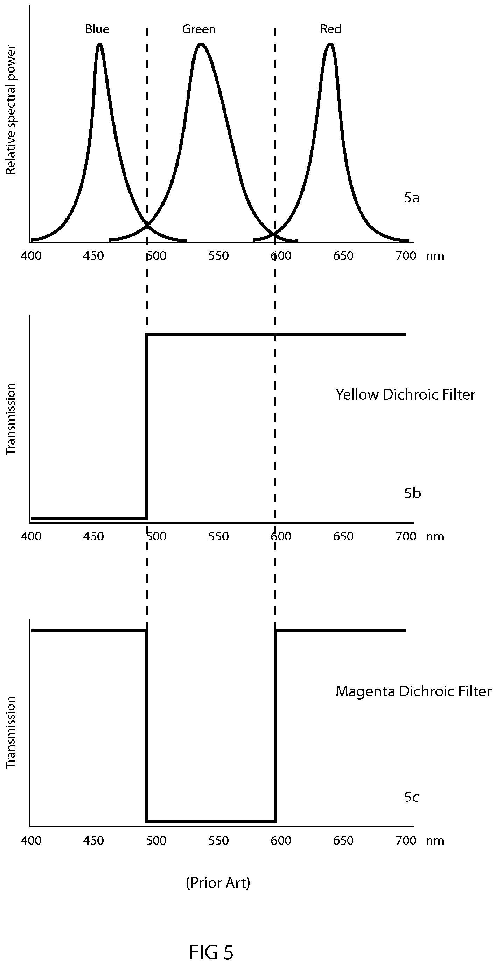

**Figure 5** illustrates the prior art use of reflective dichroic filters in both homogenizers and beam splitters. Such arrangements of dichroic filters are commonly used to both combine light and to split light for video cameras into their red, green, and blue components. **Figure 5a** shows the relative spectral power distributions (SPD) of the light emitted by red, green and blue LEDs with discrete wavelength peaks. It can be seen that the blue LED peaks at around 450 nm, the green at 550 nm and the red at 650 nm. The Yellow dichroic illustrated in **5b** has a filter characteristic such that it allows the red, 650 nm, and green, 550 nm, light to pass unimpeded, while reflecting the blue, 450 nm. Such a filter would appear yellow to the eye. Similarly, the Magenta dichroic illustrated in **5c** has a filter characteristic such that it allows the red, 650 nm, and blue, 450 nm, light to pass unimpeded, while reflecting the green, 550 nm. Such a filter would appear magenta to the eye. These two filters may be used in a layout similar to that shown in Figure 1 as dichroic filters **52** and **54** so as to combine the output of red, green and blue LEDs. However, these filters would not allow us to add in amber, cyan, and yellow LEDs.

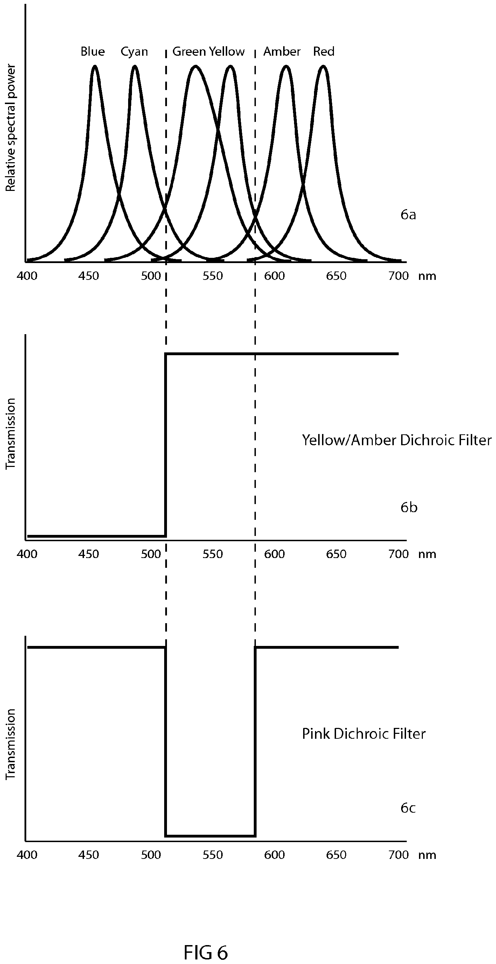

**Figure 6a** shows the relative spectral power distributions (SPD) of the light emitted by an embodiment of the invention utilizing red, amber, green, yellow, blue, and cyan LEDs. It can be seen that the LED's have discrete wavelength peaks with blue LED peak at around 450 nm, the cyan at 475 nm, the green at 550 nm, the yellow at 575 nm, the amber at 625 nm, and the red at 650 nm. The Yellow/Amber dichroic illustrated in **6b** has a filter characteristic such that it allows the red 650 nm, amber, 625 nm, yellow 575 nm, and green 550 nm, light to pass unimpeded, while reflecting the blue 450 nm and cyan 475 nm. Such a filter would appear yellow/amber to the eye. Similarly, the Pink dichroic **6c** illustrated has a filter characteristic such that it allows the red, 650 nm, amber 625 nm, cyan 475 nm, and blue 450 nm, light to pass unimpeded, while reflecting the yellow 575 nm, and green, 550 nm. Such a filter would appear pink to the eye. These two filters may be used in **Figure 1** as dichroic filters **52** and **54** so as to combine the output of red, amber, green, yellow, blue, and cyan LEDs.

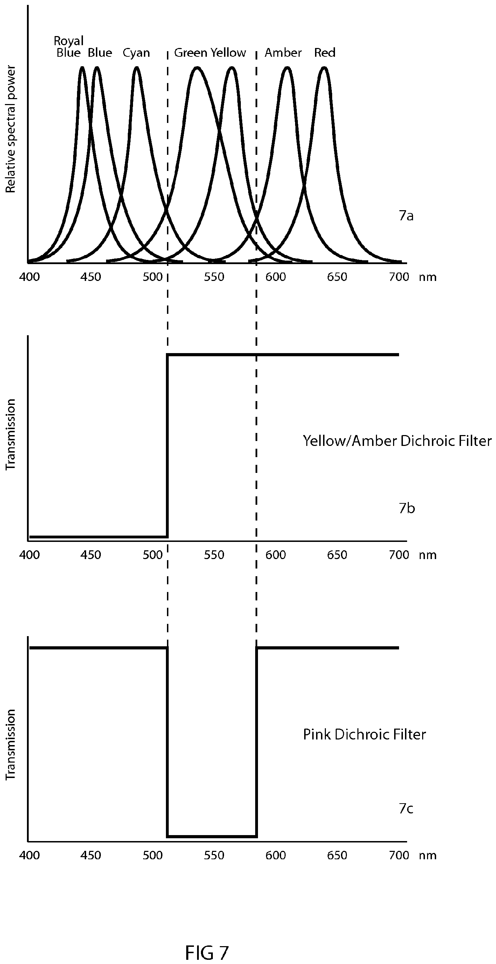

**Figure 7a** illustrates an alternative embodiment extended to include further colors of LEDs. In this embodiment a Royal Blue LED of wavelength 440 nm has been added to second LED array **30.** The appropriate filter characteristics of the dichroic filters to utilize this color are shown in **Figure 7b** and **7c****.**

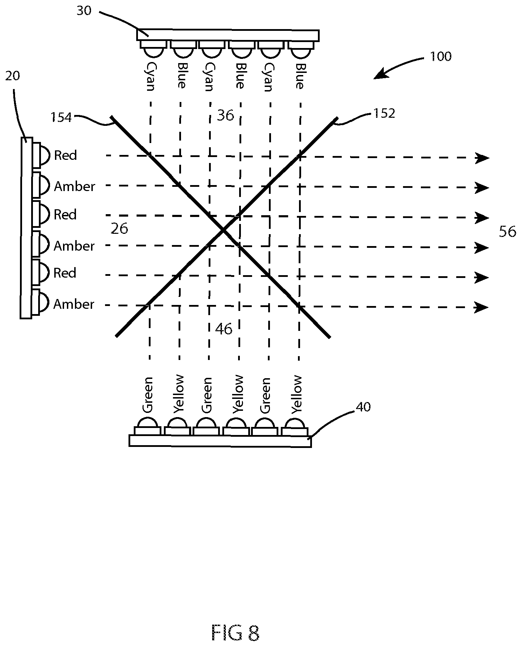

**Figure 8** illustrates a further embodiment of an LED light homogenizer **100.** In the embodiment shown dichroic filters **152** and **154** have been arranged in a crossed arrangement as opposed to the serial arrangement shown in **Figure 1****.** This layout reduces the overall length of the assembly.

The embodiments illustrated in **Figure 1****,** **Figure 8****,** and **Figure 9** show the red and amber emitters **20** at the rear with blue and cyan **30** on one side and yellow and green **40** on the other, however it should be understood that this layout is a single example of possible arrangements of the light emitters of the invention and that further embodiments with the LED emitters arranged differently. For example in alternative embodiments, the green and yellow LEDs **40** may be located at the rear where the red and amber LEDs 20 are illustrated in the Figures. Of course the configuration of the dichroic filters/mirrors 52, 54 and/or 152, 154 will have to match the configuration of the LEDs so that the desired colors pass 56 in the case of the rear LED array and reflect in the direction 56 in the case of the side LED arrays.

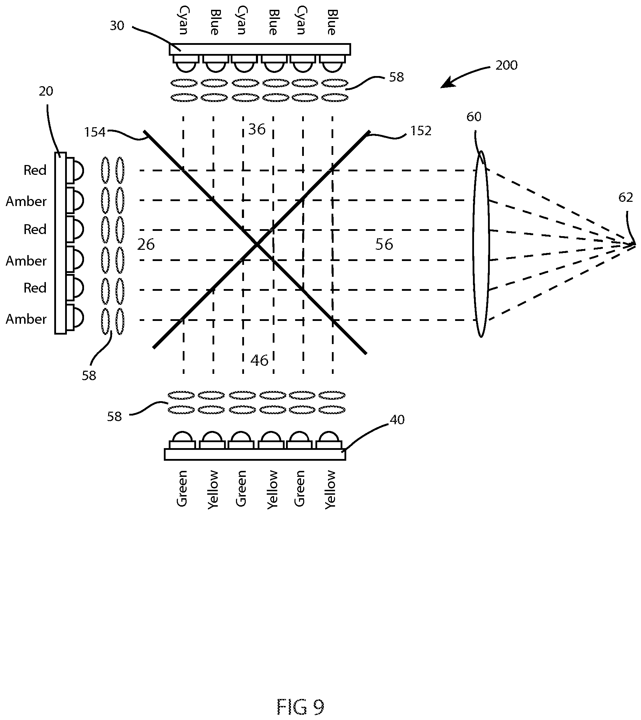

**Figure 9** illustrates a further embodiment of an LED light homogenizer and adds controlling optics to the system. Each LED may have a secondary optical system **58** which serves to collimate and direct the light beam through the dichroic filters **152** and 154. The system may also have focusing and homogenizing optics **60** which may focus the exiting light beam **56** to a focal point **62.** Focusing and homogenizing optics **60** may include optical elements selected from but not restricted to; optical diffuser, holographic diffuser, non-Gaussian diffuser, integrating rod of any cross section, integrating tunnel of any cross section, or other optical means of homogenizing or mixing light as well known in the art. Focusing and homogenizing optics **60** may further include optical elements selected from but not restricted to a single positive or negative lens, or multiple lenses arranged in one or more optical groups. Such an optical system may have movable elements such that the focal length of the optics **60** is adjustable. The optical system may also include field stops, apertures, gates, gobos, and other optical devices well known in the art.

The control of the filter characteristics of dichroic filters **52** and **54** is critical for the invention. The filters must be carefully manufactured such that their pass bands match the wavelengths of the LEDs utilized. The wavelength responses of the filters shown in **Figure 6** are shown very simplistically. In practice the response is not nearly so square or abrupt. Additionally the response is shown generically so that it would work for both the embodiments illustrated in **Figure 1** as well as the embodiments illustrated in **Figure 8** and **Figure 9****.** The generalized response shows a cut-off length at around 500 nm for the Yellow dichroic filter which corresponds with filter **54** in **Figure 1** and **154** in **Figure 8** and **Figure 9****.** However, in other embodiments the cut-off length could be designed to be closer to 600 nm for filter **54** in **Figure 1****.**

By way of the example embodiments of **Figure 1****,** filter **54** should be designed to both: (1) maximize the reflection of light at the LED peaks at around 450 nm (blue) and around 475 nm (cyan); and (2) maximize the transmission of light at LED peaks at around 625 nm (amber), and around 650 nm (red). Filter **52** should be designed to both: (1) maximize the reflection of light at the LED peaks at around 550 nm the (green), and around 575 nm (yellow); and (2) maximize the transmission of light at LED peaks around 450 nm (blue) and at 475 nm (cyan), around 625 nm (amber), and around 650 nm (red).

By way of the example embodiments of **Figure 8****,** filter **154** should be designed to both: (1) maximize the reflection of light at the LED peaks at around 450 nm (blue) and around 475 nm (cyan); and (2) maximize the transmission of light at LED peaks at around 550 nm the (green), around 575 nm (yellow), around 625 nm (amber), and around 650 nm (red). Filter **152** should be designed to both: (1) maximize the reflection of light at the LED peaks at around 550 nm the (green), and around 575 nm (yellow); and (2) maximize the transmission of light at LED peaks around 450 nm (blue) and at 475 nm (cyan), around 625 nm (amber), and around 650 nm (red).

By way of the example embodiments of **Figure 1** with the LED peaks of **Figure 7****,** filter **54** should be designed to both: (1) maximize the reflection of light at the LED peaks at around 440 nm (royal blue), around 450 nm (blue) and around 475 nm (cyan); and (2) maximize the transmission of light at LED peaks at around 625 nm (amber), and around 650 nm (red). Filter **52** should be designed to both: (1) maximize the reflection of light at the LED peaks at around 550 nm the (green), and around 575 nm (yellow); and (2) maximize the transmission of light at LED peaks around 440 nm (royal blue), around 450 nm (blue) and at 475 nm (cyan), around 625 nm (amber), and around 650 nm (red).

By way of the example embodiments of **Figure 8** with the LED peaks of **Figure 7****,** filter **154** should be designed to both: (1) maximize the reflection of light at the LED peaks at around 440 nm (royal blue), around 450 nm (blue), and around 475 nm (cyan); and (2) maximize the transmission of light at LED peaks at around 550 nm the (green), around 575 nm (yellow), around 625 nm (amber), and around 650 nm (red). Filter **152** should be designed to both: (1) maximize the reflection of light at the LED peaks at around 550 nm the (green), and around 575 nm (yellow); and (2) maximize the transmission of light at LED peaks at around 440 nm (royal blue), around 450 nm (blue), around 475 nm (cyan), around 625 nm (amber), and around 650 nm (red).

It should be appreciated that in their preferred modes of each of the embodiments described herein, the LED array **20, 30** and **40** are controlled by a controller **10** which is connected to the arrays. The connection may be electrical as illustrated in **Figure 1** or may be by wireless communication means for controlling the LED's capacity to output light. In a preferred embodiment, the control of the colors as defined by their peak wavelength are controlled independent of the other colors similarly defined and at least one of multiple arrays has multiple such defined colors each independently controllable.

While the disclosure has been described with respect to a limited number of embodiments, those skilled in the art, having benefit of this disclosure, will appreciate that other embodiments may be devised which do not depart from the scope of the disclosure as disclosed herein. The disclosure has been described in detail, it should be understood that various changes, substitutions and alterations can be made hereto without departing from the scope of the disclosure. The scope of the invention should, therefore, be determined not with reference to the above description, but instead should be determined with reference to the appended claims. References signs in the claims shall not be construed as limiting the claim.

## Claims

1. A directed beam luminaire for combining more than three different colors of LED into a single homogenized light beam, **characterised in that** the luminaire comprises:
three circular LED arrays (20, 30, 40), each of the three LED arrays configured to emit light in one of three different wavelength ranges respectively, wherein a first array is configured to emit light in the long wavelength range, a second array is configured to emit light in the short wavelength range, and a third array is configured to emit light in a midrange wavelength range, wherein each of the three LED arrays has first and second sets of LEDs, wherein the LEDs of the first sets have a first discrete wavelength peak and the LEDs of the second sets have a second different discrete wavelength peak, the first and second discrete wavelength peaks being in the respective wavelength range of said LED array, and wherein the output of at least one of the sets of LEDs is controllable independently of the other sets of LEDs;
first and second dichroic filters (52, 54; 152, 154) adapted to combine light (26, 36, 46) emitted by the three LED arrays (20, 30, 40) into a single homogenized light beam, wherein the first and second dichroic filters are configured to selectively transmit or reflect the discrete wavelength peaks of the LEDs of each of the three LED arrays (20, 30, 40), wherein at least one of the dichroic filters (52, 54; 152, 154) is configured to allow the different first and second discrete wavelength peaks of at least one LED array to pass through unaffected; and
a focusing and homogenizing optical device (60) that receives the single homogenized light beam (56) emitted by the dichroic filters (52, 54; 152, 154), without passing through intervening lenses, and that focuses it to a focal point (62).

2. The directed beam luminaire of claim 1, wherein the first LED array (20) of the three LED arrays (20, 30, 40) comprises a first set of red LEDs and a second set of amber LEDs, wherein the second LED array (30) of the three LED arrays (20, 30, 40) comprises a first set of blue LEDS and a second set of cyan LEDs, and wherein the third LED array (40) of the three LED arrays (20, 30, 40) comprises a first set of yellow LEDs and a second set of green LEDs.

3. The directed beam luminaire of claim 1 or 2, wherein the LEDs of the first and second sets of each LED array (20, 30, 40) are distributed and mixed across the LED array (20, 30, 40).

4. The directed beam luminaire of claim 1, 2 or 3, wherein the luminaire utilizes red, amber, green, yellow, blue, and cyan LEDs.

5. The directed beam luminaire of claim 1, 2 or 3, wherein the luminaire utilizes red, amber, green, yellow, blue, and royal blue LEDs.

6. The directed beam luminaire of any of the preceding claims, wherein a first dichroic filter (54, 154) of the plurality of dichroic filters (52, 54; 152, 154) is arranged as a long pass filter letting through wavelengths longer than a cut-off length, and wherein the first dichroic filter (54, 154) is configured to reflect light of other wavelengths.

7. The directed beam luminaire of claim 6, wherein the cut-off length of the first dichroic filter (54, 154) is at around 500 nm.

8. The directed beam luminaire of claim 6 or 7, wherein the first dichroic filter (54, 154) is arranged to reflect light at LED peaks at around 450 nm and at around 475 nm and to transmit light at LED peaks at around 625 nm and at around 650 nm.

9. The directed beam luminaire of claim 8, wherein the first dichroic filter (54, 154) is further arranged to transmit light at LED peaks at around 550 nm and at round 575 nm.

10. The directed beam luminaire of any of the preceding claims, wherein a second dichroic filter (52, 152) of the plurality of dichroic filters (52, 54; 152, 154) is arranged to reflect light at the LED peaks at around 550 nm and at around 575 nm, and to transmit light at the LED peaks at around 450 nm, at around 475 nm, at around 625 nm, and at around 650 nm.

11. The directed beam luminaire of any of the preceding claims, wherein the plurality of dichroic filters (152, 154) are arranged in a crossed arrangement.

12. The directed beam luminaire of any of claims 1-10, wherein the plurality of dichroic filters (52, 54) are arranged in a serial arrangement.

13. The directed beam luminaire of any of the preceding claims, wherein the luminaire further comprises a controller (12) electrically connected to the plurality of LED arrays (20, 30, 40) and configured to control the plurality of LED arrays (20, 30, 40).

14. The directed beam luminaire of any preceding claims, wherein each LED further comprises a secondary optical system (58) configured to collimate and direct the light beam through the dichroic filters (152, 154).

## Patentansprüche

1. Richtstrahlleuchte zum Kombinieren von mehr als drei verschiedenen LED-Farben zu einem einzigen homogenisierten Lichtstrahl, **dadurch gekennzeichnet, dass** die Leuchte umfasst:
drei kreisförmige LED-Arrays (20, 30, 40), wobei jedes der drei LED-Arrays konfiguriert ist, um Licht in einem von drei verschiedenen Wellenlängenbereichen zu emittieren, wobei ein erstes Array konfiguriert ist, um Licht im langen Wellenlängenbereich zu emittieren, ein zweites Array konfiguriert ist, um Licht im kurzen Wellenlängenbereich zu emittieren, und ein drittes Array konfiguriert ist, um Licht in einem mittleren Wellenlängenbereich zu emittieren, wobei jedes der drei LED-Arrays einen ersten und einen zweiten Satz von LEDs aufweist, wobei die LEDs der ersten Sätze einen ersten diskreten Wellenlängenpeak aufweisen und die LEDs der zweiten Sätze einen zweiten unterschiedlichen diskreten Wellenlängenpeak aufweisen, wobei der erste und der zweite diskrete Wellenlängenpeak im jeweiligen Wellenlängenbereich des LED-Arrays liegen und wobei der Ausgang von mindestens einem der Sätze von LEDs unabhängig von den anderen LED-Sätzen steuerbar ist;
erste und zweite dichroitische Filter (52, 54; 152, 154), die angepasst sind, um das von den drei LED-Arrays (20, 30, 40) emittierte Licht (26, 36, 46) zu einem einzigen homogenisierten Lichtstrahl zu kombinieren, wobei der erste und der zweite dichroitische Filter konfiguriert sind, um selektiv die diskreten Wellenlängenpeaks der LEDs jedes der drei LED-Arrays (20, 30, 40) zu übertragen oder zu reflektieren, wobei mindestens einer der dichroitischen Filter (52, 54; 152, 154) konfiguriert ist, um es den unterschiedlichen ersten und zweiten diskreten Wellenlängenpeaks von mindestens einem LED-Array zu erlauben, unbeeinflusst hindurch zu gelangen; und
eine optische Fokussierungs- und Homogenisierungsvorrichtung (60), die den einzelnen homogenisierten Lichtstrahl (56) empfängt, der von den dichroitischen Filtern (52, 54; 152, 154) emittiert wird, ohne durch dazwischenliegende Linsen zu gelangen, und die diesen auf einen Brennpunkt (62) fokussiert.

2. Richtstrahlleuchte nach Anspruch 1, wobei das erste LED-Array (20) der drei LED-Arrays (20, 30, 40) einen ersten Satz roter LEDs und einen zweiten Satz bernsteingelber LEDs umfasst, wobei das zweite LED-Array (30) der drei LED-Arrays (20, 30, 40) einen ersten Satz blauer LEDs und einen zweiten Satz cyanfarbener LEDs umfasst, und wobei das dritte LED-Array (40) der drei LED-Arrays (20, 30, 40) einen ersten Satz gelber LEDs und einen zweiten Satz grüner LEDs umfasst.

3. Richtstrahlleuchte nach Anspruch 1 oder 2, wobei die LEDs des ersten und zweiten Satzes jedes LED-Arrays (20, 30, 40) über das LED-Array (20, 30, 40) verteilt und gemischt sind.

4. Richtstrahlleuchte nach Anspruch 1, 2 oder 3, wobei die Leuchte rote, bernsteingelbe, grüne, gelbe, blaue und cyanfarbene LEDs verwendet.

5. Richtstrahlleuchte nach Anspruch 1, 2 oder 3, wobei die Leuchte rote, bernsteingelbe, grüne, gelbe, blaue und königsblaue LEDs verwendet.

6. Richtstrahlleuchte nach einem der vorhergehenden Ansprüche, wobei ein erster dichroitischer Filter (54, 154) der mehreren dichroitischen Filter (52, 54; 152, 154) als ein Langpassfilter angeordnet ist, der Wellenlängen durchlässt, die länger als eine Cut-off-Länge sind, und wobei der erste dichroitische Filter (54, 154) konfiguriert ist, um Licht anderer Wellenlängen zu reflektieren.

7. Richtstrahlleuchte nach Anspruch 6, wobei die Cut-off-Länge des ersten dichroitischen Filters (54, 154) bei etwa 500 nm liegt.

8. Richtstrahlleuchte nach Anspruch 6 oder 7, wobei der erste dichroitische Filter (54, 154) angeordnet ist, um Licht bei LED-Peaks bei etwa 450 nm und bei etwa 475 nm zu reflektieren und Licht bei LED-Peaks bei etwa 625 nm und bei etwa 650 nm zu übertragen.

9. Richtstrahlleuchte nach Anspruch 8, wobei der erste dichroitische Filter (54, 154) ferner angeordnet ist, um Licht bei LED-Peaks bei etwa 550 nm und bei etwa 575 nm durchzulassen.

10. Richtstrahlleuchte nach einem der vorhergehenden Ansprüche, wobei ein zweiter dichroitischer Filter (52, 152) der mehreren dichroitischen Filter (52, 54; 152, 154) angeordnet ist, um Licht bei den LED-Peaks bei etwa 550 nm und bei etwa 575 nm zu reflektieren und um Licht bei den LED-Peaks bei etwa 450 nm, bei etwa 475 nm, bei etwa 625 nm und bei etwa 650 nm zu übertragen.

11. Richtstrahlleuchte nach einem der vorhergehenden Ansprüche, wobei die mehreren dichroitischen Filter (152, 154) in einer gekreuzten Anordnung angeordnet sind.

12. Richtstrahlleuchte nach einem der Ansprüche 1 bis 10, wobei die mehreren dichroitischen Filter (52, 54) in einer seriellen Anordnung angeordnet sind.

13. Richtstrahlleuchte nach einem der vorhergehenden Ansprüche, wobei die Leuchte ferner eine Steuerung (12) umfasst, die elektrisch mit den mehreren LED-Arrays (20, 30, 40) verbunden und konfiguriert ist, um die mehreren LED-Arrays (20, 30, 40) zu steuern.

14. Richtstrahlleuchte nach einem der vorhergehenden Ansprüche, wobei jede LED ferner ein sekundäres optisches System (58) umfasst, das konfiguriert ist, um den Lichtstrahl durch die dichroitischen Filter (152, 154) zu bündeln und zu lenken.

## Revendications

1. Luminaire à faisceau dirigé destiné à combiner plus de trois couleurs différentes de DEL en un seul faisceau lumineux homogénéisé, **caractérisé en ce que** le luminaire comprend :
trois matrices de DEL circulaires (20, 30, 40), chacune des trois matrices de DEL étant configurée pour émettre de la lumière dans l'une parmi trois plages de longueurs d'onde différentes respectivement, une première matrice étant configurée pour émettre de la lumière dans la plage de longueurs d'onde longue, une deuxième matrice étant configurée pour émettre de la lumière dans la plage de longueurs d'onde courte, et une troisième matrice étant configurée pour émettre de la lumière dans une plage de longueurs d'onde moyenne, chacune des trois matrices de DEL ayant des premier et second ensembles de DEL, les DEL des premiers ensembles ayant un premier pic de longueur d'onde discret et les DEL des seconds ensembles ayant un second pic de longueur d'onde discret différent, les premier et second pics de longueur d'onde discrets étant dans la plage de longueurs d'onde respective de ladite matrice de DEL, et la sortie d'au moins un des ensembles de DEL étant contrôlable indépendamment des autres ensembles de DEL ;
des premier et second filtres dichroïques (52, 54 ; 152, 154) adaptés pour combiner la lumière (26, 36, 46) émise par les trois matrices de DEL (20, 30, 40) en un seul faisceau lumineux homogénéisé, les premier et second filtres dichroïques étant configurés pour transmettre ou réfléchir sélectivement les pics de longueur d'onde discrets des DEL de chacune des trois matrices de DEL (20, 30, 40), au moins un des filtres dichroïques (52, 54 ; 152, 154) étant configuré pour permettre aux différents premier et second pics de longueur d'onde discrets d'au moins une matrice de DEL de passer sans être affectés ; et
un dispositif optique de focalisation et d'homogénéisation (60) qui reçoit le faisceau lumineux homogénéisé unique (56) émis par les filtres dichroïques (52, 54 ; 152, 154), sans passer à travers des lentilles intermédiaires, et qui le concentre sur un point focal (62).

2. Luminaire à faisceau dirigé selon la revendication 1, dans lequel la première matrice de DEL (20) des trois matrices de DEL (20, 30, 40) comprend un premier ensemble de DEL rouges et un second ensemble de DEL oranges, la deuxième matrice de DEL (30) des trois matrices de DEL (20, 30, 40) comprenant un premier ensemble de DEL bleues et un second ensemble de DEL cyan, et dans lequel la troisième matrice de DEL (40) des trois matrices de DEL (20, 30, 40) comprend un premier ensemble de DEL jaunes et un second ensemble de DEL vertes.

3. Luminaire à faisceau dirigé selon la revendication 1 ou 2, dans lequel les DEL des premier et second ensembles de chaque matrice de DEL (20, 30, 40) sont distribuées et mélangées à travers la matrice de DEL (20, 30, 40).

4. Luminaire à faisceau dirigé selon la revendication 1, 2 ou 3, dans lequel le luminaire utilise des DEL rouges, oranges, vertes, jaunes, bleues et cyan.

5. Luminaire à faisceau dirigé selon la revendication 1, 2 ou 3, dans lequel le luminaire utilise des DEL rouges, oranges, vertes, jaunes, bleues et bleues royales.

6. Luminaire à faisceau dirigé selon l'une quelconque des revendications précédentes, dans lequel un premier filtre dichroïque (54, 154) de la pluralité de filtres dichroïques (52, 54; 152, 154) est agencé comme un filtre passe-long laissant passer des longueurs d'onde plus longues qu'une longueur de coupure, et le premier filtre dichroïque (54, 154) étant configuré pour réfléchir la lumière d'autres longueurs d'onde.

7. Luminaire à faisceau dirigé selon la revendication 6, dans lequel la longueur de coupure du premier filtre dichroïque (54, 154) est d'environ 500 nm.

8. Luminaire à faisceau dirigé selon la revendication 6 ou 7, dans lequel le premier filtre dichroïque (54, 154) est agencé pour réfléchir la lumière aux pics de DEL à environ 450 nm et à environ 475 nm et pour transmettre la lumière aux pics de DEL à environ 625 nm et à environ 650 nm.

9. Luminaire à faisceau dirigé selon la revendication 8, dans lequel le premier filtre dichroïque (54, 154) est en outre agencé pour transmettre la lumière aux pics de DEL à environ 550 nm et à environ 575 nm.

10. Luminaire à faisceau dirigé selon l'une quelconque des revendications précédentes, dans lequel un second filtre dichroïque (52, 152) de la pluralité de filtres dichroïques (52, 54 ; 152, 154) est agencé pour réfléchir la lumière au niveau des pics de DEL à environ 550 nm et à environ 575 nm, et pour transmettre la lumière aux pics de DEL à environ 450 nm, à environ 475 nm, à environ 625 nm et à environ 650 nm.

11. Luminaire à faisceau dirigé selon l'une quelconque des revendications précédentes, dans lequel la pluralité de filtres dichroïques (152, 154) sont agencés selon un agencement croisé.

12. Luminaire à faisceau dirigé selon l'une quelconque des revendications 1 à 10, dans lequel la pluralité de filtres dichroïques (52, 54) sont agencés selon un agencement en série.

13. Luminaire à faisceau dirigé selon l'une quelconque des revendications précédentes, dans lequel le luminaire comprend en outre un dispositif de commande (12) connecté électriquement à la pluralité de matrices de DEL (20, 30, 40) et configuré pour commander la pluralité de matrices de DEL (20, 30, 40).

14. Luminaire à faisceau dirigé selon l'une quelconque des revendications précédentes, dans lequel chaque DEL comprend en outre un système optique secondaire (58) configuré pour collimater et diriger le faisceau lumineux à travers les filtres dichroïques (152, 154).
